# EUROPEAN PATENT APPLICATION

(11) **EP 4 740 744 A1**
(43) Date of publication of application: **13.05.2026**
(21) Application number: 24835993.7
(22) Date of filing: 28.06.2024
(51) Int. Cl.: A23L 2/00, C12C 7/00

(54) **METHOD FOR PRODUCING FERMENTED MALT LIQUID**

(30) Priority: 04.07.2023 JP 2023109981
(71) Applicant: Asahi Group Holdings, Ltd., Tokyo 130-8602 (JP)
(72) Inventor: MAEDA, Satoshi, Moriya-shi, Ibaraki 302-0106 (JP); MIYOSHI, Miho, Moriya-shi, Ibaraki 302-0106 (JP); IKEDA, Yuka, Moriya-shi, Ibaraki 302-0106 (JP); TAKAHASHI, Tomoko, Moriya-shi, Ibaraki 302-0106 (JP); SASHIHARA, Koichi, Moriya-shi, Ibaraki 302-0106 (JP); KUSUNOKI, Keizo, Tokyo 130-8602 (JP); CONG, Jiaheng, Tokyo 130-8602 (JP); KANDA, Tomomasa, Moriya-shi, Ibaraki 302-0106 (JP)
(74) Representative: Müller-Boré & Partner Patentanwälte PartG mbB
(86) International application number: PCT/JP2024/023580
(87) International publication number: WO 2025/009480

(57) **Abstract**

The present invention provides a method for producing a malt-fermented liquid having a low ethanol concentration and sufficiently few unpleasant odors derived from the wort, and a malt-fermented beverage obtained from the malt-fermented liquid obtained by the production method. The present invention provides a method for producing a malt-fermented liquid, comprising inoculating a fermentation raw material liquid containing a malt-derived saccharification product with a yeast and fermenting it to prepare a malt-fermented liquid, wherein the yeast is a RAG⁻ phenotype *Kluyveromyces lactis,* and an ethanol concentration of the malt-fermented liquid is less than 0.05 v/v% per 5.0 mass% Brix; and a method for producing a malt-fermented beverage, comprising producing a malt-fermented liquid by the method for producing a malt-fermented liquid, followed by producing a malt-fermented beverage using the obtained malt-fermented liquid as a raw material.

## Description

### TECHNICAL FIELD

The present invention relates to a method for producing a fermentation broth using a malt-derived saccharification product as a fermentation raw material, which has a low ethanol concentration and reduced wort odors, and a method for producing a beverage containing the fermentation broth produced by the production method as a raw material.

This application claims priority based on Japanese Patent Application No. 2023-109981, filed on July 4, 2023, the contents of which are incorporated herein by reference.

### BACKGROUND ART

In recent years, a wide variety of alcoholic beverages have been launched on the market in response to the diversification of consumer preferences. For example, there is an increasing demand for alcoholic beverages with a relatively low alcohol content, which are easier to drink. On the other hand, in the case of fermented alcoholic beverages, in addition to ethanol, various aroma components are produced by yeast during the fermentation, which contribute to the flavor of the beverage.

In fermented alcoholic beverages, various aroma components produced during fermentation depend on the type of yeast used in fermentation. For example, the yeast most widely used in brewing beer and wine is *Saccharomyces,* but in recent years, yeasts other than *Saccharomyces* have been used to produce beers with flavors different from those of conventional beers.

For example, a method for producing beer with a high content of isoamyl acetate (IAAT) and ethyl acetate by fermenting wort under aerobic conditions using yeast of the genus *Pichia* such as *Pichia kluyveri* is known (Patent Document 1). In addition, a method for producing a fermented beverage with an alcohol concentration of less than 1% by volume is known by inoculating a mixture of wort and whey with *Kluyveromyces lactis* and *Kluyveromyces flagilis* and fermenting the mixture (Patent Document 2). Furthermore, for the production of low-alcohol beer, *Saccharomycodes ludwigii,* which has low ethanol productivity, has been used as a yeast for producing non-alcoholic beer (Non-Patent Document 1).

On the other hand, several yeast mutants with low ethanol production have been reported. For example, it has been reported that mutant strains of *Kluyveromyces lactis* with a phenotype that cannot grow when respiration is inhibited (RAG⁻ phenotype) produce less ethanol on YPD medium than wild-type strains (Non-Patent Document 2). It has also been reported that mutant strains with RAG⁻ phenotype can be selected by subjecting wild-type strains of *Kluyveromyces lactis* to mutation treatment and using poor growth in a medium containing antimycin A, a respiration inhibitor, as an indicator (Non-Patent Document 3).

### Citation List

### Patent Documents

Patent Document 1: PCT International Publication No. 2014/202564
Patent Document 2: Japanese Unexamined Patent Application, First Publication No. 60-094077

### Non-Patent Documents

Non-Patent Document 1: Bellut, et al., Journal of the American Society of Brewing Chemists, 2019, DOI: 10.1080/03610470.2019.1569452
Non-Patent Document 2: Wesolowski-Louvel, et al., Molecular and General Genetics, 1992, vol. 233(1-2), p. 89-96.
Non-Patent Document 3: Wesolowski-Louvel, et al., Yeast, 1992, vol. 8, p. 711-719.

### SUMMARY OF INVENTION

### Technical Problem

In the production of fermented alcoholic beverages, suppressing the degree of fermentation in order to keep the ethanol concentration low may result in a decrease in the content of aroma components or in poor fermentation, leaving unpleasant odors derived from the wort.

The present invention aims to provide a method for producing a malt-fermented liquid having a low ethanol concentration and reduced wort odors remaining due to poor fermentation, a method for producing a malt-fermented beverage using the malt-fermented liquid produced by said production method, and a malt-fermented beverage produced by said production method. Solution to Problem

As a result of intensive research aimed at solving the above problems, the present inventors have found that by fermenting a fermentation raw material liquid containing a malt-derived saccharification product using a RAG⁻ phenotype *Kluyveromyces lactis,* fermentation can be carried out sufficiently while ethanol production is greatly suppressed, making it possible to produce a malt-fermented liquid with a sufficiently low ethanol concentration and reduced unpleasant odors derived from the wort, and thus completed the present invention.

The method for producing a malt-fermented liquid, the method for producing a malt-fermented beverage, and the malt-fermented beverage according to the present invention are as follows.
[1] A method for producing a malt-fermented liquid, comprising
   inoculating a fermentation raw material liquid containing a malt-derived saccharification product with a yeast and fermenting it to prepare a malt-fermented liquid, wherein
   the yeast is a RAG⁻ phenotype *Kluyveromyces lactis,* and
   an ethanol concentration of the malt-fermented liquid is less than 0.05 v/v% per 5.0 mass% Brix.
[2] The method for producing a malt-fermented liquid according to [1], wherein a methional concentration of the malt-fermented liquid is 3.0 ppb or less per 5.0 mass% Brix.
[3] The method for producing a malt-fermented liquid according to [1] or [2], wherein the methional concentration of the malt-fermented liquid is 15 mass% or less of the methional concentration of the fermentation raw material liquid.
[4] The method for producing a malt-fermented liquid according to any one of [1] to [3], wherein a concentration of the yeast in the malt-fermented liquid at the end of fermentation is 3.0 × 10⁶ cells/mL or more.
[5] The method for producing a malt-fermented liquid according to any one of [1] to [4], wherein a concentration of the yeast of the malt-fermented liquid at the start of the fermentation is 2.0 × 10⁴ cells/mL or more.
[6] The method for producing a malt-fermented liquid according to any one of [1] to [5], wherein
   the fermentation is carried out under oxygen-supply conditions, and
   the oxygen-supply conditions are conditions in which a time required to increase the dissolved oxygen concentration of pure water from 6.0 ppm to 8.0 ppm at 18°C and atmospheric pressure is more than 0 hours and not more than 5 hours.
[7] The method for producing a malt-fermented liquid according to any one of [1] to [5], wherein the fermentation is carried out under conditions in which no oxygen is supplied.
[8] The method for producing a malt-fermented liquid according to any one of [1] to [7], wherein the fermentation is carried out at a temperature of 1°C or higher.
[9] The method for producing a malt-fermented liquid according to any one of [1] to [8], wherein the fermentation is carried out for 4 hours or more.
[10] The method for producing a malt-fermented liquid according to any one of [1] to [8], wherein the fermentation is carried out for 24 hours or more.
[11] A method for producing a malt-fermented beverage, comprising producing a malt-fermented liquid by the method for producing a malt-fermented liquid according to any one of [1] to [10], followed by producing a malt-fermented beverage using the obtained malt-fermented liquid as a raw material.
[12] The method for producing a malt-fermented beverage according to [11], further comprising diluting the malt-fermented liquid.
[13] The method for producing a malt-fermented beverage according to [11] or [12], wherein a malt-fermented beverage with an original wort extract content of 3 to 7 mass% is produced.
[14] The method for producing a malt-fermented beverage according to any one of [11] to [13], wherein the malt-fermented beverage is a beer-like sparkling beverage.
[15] A malt-fermented beverage having an ethanol concentration of less than 0.05 v/v% per 5.0 mass% Brix and a methional concentration of 3.0 ppb or less per 5.0 mass% Brix.
[16] The malt-fermented beverage according to [15], which is a beer-like sparkling beverage.

### Advantageous Effects of Invention

In the method for producing a malt-fermented liquid according to the present invention, fermentation is carried out using a RAG⁻ phenotype *Kluyveromyces lactis,* which has an extremely low ethanol production ability and can sufficiently remove unpleasant odors derived from the wort. Therefore, the method for producing a malt-fermented liquid according to the present invention can provide a malt-fermented liquid having a low ethanol concentration and sufficiently reduced unpleasant odors derived from the wort. Furthermore, by using the malt-fermented liquid, a malt-fermented beverage having a low ethanol concentration and suppressed wort odors can be provided.

### BRIEF DESCRIPTION OF DRAWINGS

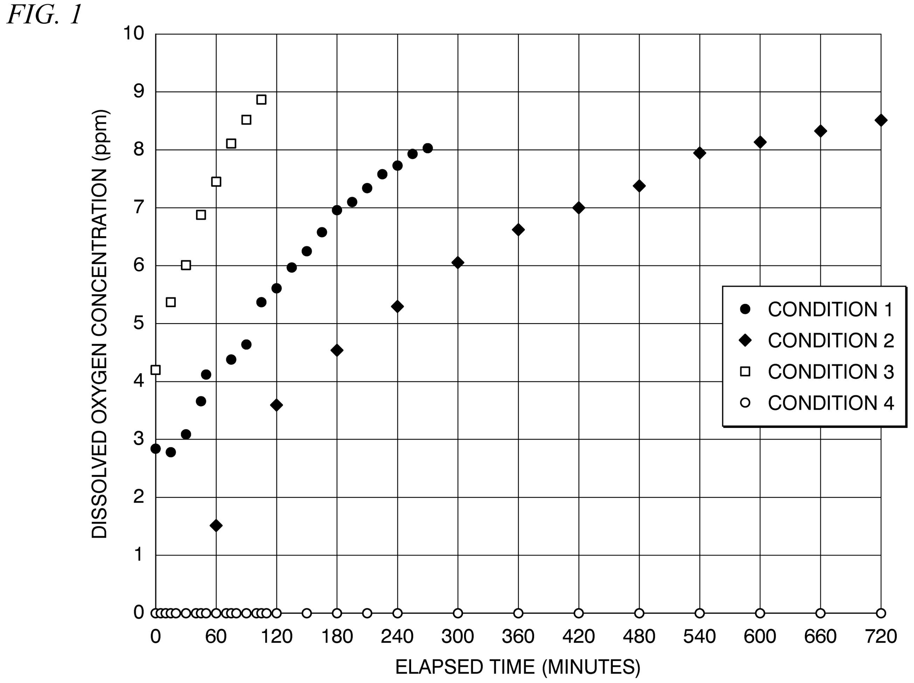

[FIG. 1] A graph showing the results of measuring the dissolved oxygen concentration over time in pure water incubated at 18°C and atmospheric pressure under various oxygen-supply conditions in Reference Example 1.

### DESCRIPTION OF EMBODIMENTS

In the present invention and the present specification, the term "X₁ to X₂ (X₁ and X₂ are real numbers satisfying X₁ <X₂)" refers to a numerical range of "not less than X₁ and not more than X₂".

In the present invention and the present specification, the terms "ppb" and "ppm" refer to "ppb by mass" and "ppm by mass", respectively.

In the present invention and the present specification, the term "RAG" (Resistance to Antimycin A on Glucose ⁻) phenotype" refers to having a trait of sensitivity to a respiratory inhibitor in the presence of glucose, i.e., a trait of being subject to growth inhibition in the presence of glucose and a respiratory inhibitor. The respiratory inhibitor is not particularly limited as long as it is a substance that has an effect of inhibiting any of the oxidative phosphorylation reactions in mitochondria. Examples of the respiratory inhibitor include electron transport inhibitors such as antimycin A (CAS RN: 1397-94-0), rotenone (CAS RN: 83-79-4), and thenoyltrifluoroacetone (CAS RN: 326-91-0), and ATP synthase inhibitors such as oligomycin A (CAS RN: 579-13-5).

In the present invention and the present specification, the term "RAG⁻ phenotype *Kluyveromyces lactis"* refers to a *Kluyveromyces lactis* strain that is sensitive to a respiratory inhibitor, i.e., a strain whose normal growth is inhibited in the presence of a respiratory inhibitor. Wild-type *Kluyveromyces lactis* can grow without problems in the presence of glucose and in the presence of a respiratory inhibitor, but some mutant strains are of RAG⁻ phenotype. Whether *Kluyveromyces lactis* is of RAG⁻ phenotype or not can be identified, for example, by culturing it in a culture medium containing glucose as a carbon source and a culture medium containing a respiratory inhibitor in addition to glucose. *Kluyveromyces lactis* that can grow in a culture medium containing glucose but cannot grow in a culture medium containing a respiratory inhibitor is identified as *Kluyveromyces lactis* of RAG⁻ phenotype^{.}

The RAG⁻ phenotype *Kluyveromyces lactis* used in the present invention is not particularly limited as long as it has sensitivity to a respiratory inhibitor in the presence of glucose. Examples of the RAG⁻ phenotype *Kluyveromyces lactis* include, among *Kluyveromyces lactis,* functionally defective mutants of the RAG1 gene that encodes the glucose transporter protein RAG1. In addition, the RAG-phenotype *Kluyveromyces lactis* can also be obtained by subjecting *Kluyveromyces lactis* that does not have RAG⁻ phenotype to a mutation treatment such as a drug treatment using EMS (Ethyl Methanesulfonate) or ultraviolet light irradiation, and selecting, from the obtained mutants, a mutant that cannot be cultured in a culture medium containing a respiratory inhibitor but can be cultured in a culture medium not containing a respiratory inhibitor. In addition, the RAG⁻ phenotype *Kluyveromyces lactis* can be used by appropriately selecting a respiratory inhibitor-sensitive strain from *Kluyveromyces lactis* strains available from microbial culture collection such as the National Biotechnology Center (NBRC) of the National Institute of Technology and Evaluation and the National Collection of Yeast Cultures (NCYC) or from distributors. In the present invention, the RAG⁻ phenotype *Kluyveromyces lactis* to be inoculated into the fermentation raw material liquid may be one type or two or more types. Furthermore, the fermentation raw material liquid may be inoculated with a combination of the RAG⁻ phenotype *Kluyveromyces lactis* and other yeasts to the extent that the effects of the present invention are not impaired.

The method for producing a malt-fermented liquid according to the present invention comprises a step of inoculating a fermentation raw material liquid containing a malt-derived saccharification product with a yeast and fermenting the liquid to prepare a malt-fermented liquid, and is characterized in that a RAG⁻ phenotype *Kluyveromyces lactis* is used as the yeast. The RAG⁻ phenotype *Kluyveromyces lactis* has a sufficient ability to produce aroma components through fermentation but a low ability to produce ethanol through fermentation. Therefore, by fermenting the fermentation raw material liquid with the RAG⁻ phenotype *Kluyveromyces lactis,* it is possible to produce a malt-fermented liquid that contains various aroma components but has a sufficiently reduced ethanol concentration through fermentation.

The method for producing a malt-fermented liquid according to the present invention can produce a malt-fermented liquid having an ethanol concentration of less than 0.05 v/v% per 5.0 mass% Brix. The ethanol concentration per 5.0 mass% Brix of the malt-fermented liquid produced by the present invention is not particularly limited as long as it is less than 0.05 v/v%, but is preferably 0.025 v/v% or less, more preferably 0.010 v/v% or less, even more preferably 0.008 v/v% or less, and even more preferably 0.005 v/v% or less. The lower limit of the ethanol concentration per 5.0 mass% Brix of the malt-fermented liquid produced by the present invention is not particularly limited, and may be, for example, 0.001 v/v% or more, or may be 0.002 v/v% or more. The methional concentration per 5.0 mass% Brix of the malt-fermented liquid produced by the present invention is not particularly limited as long as it is 3.0 ppb or less, but is preferably 1.0 ppb or less. The lower limit of the methional concentration per 5.0 mass% Brix of the malt-fermented liquid produced by the present invention is not particularly limited, and may be, for example, 0.10 ppb or more, or may be 0.20 ppb or more.

In the present invention and the present specification, the ethanol concentration of the malt-fermented liquid or the beverage can be measured by, for example, an enzymatic method using spectroscopy to measure the amount of NADH (reduced nicotinamide adenine dinucleotide) produced using ADH (alcohol dehydrogenase) and ALDH (aldehyde dehydrogenase), an enzymatic method using the multifunctional biosensor BF-5 (manufactured by Oji Scientific Instruments), a distillation-density (specific gravity) method, a gas chromatography (GC) analysis method, an oxidation method (oxidation-reduction titration method), or the like.

In the method for producing a malt-fermented liquid according to the present invention, not only can ethanol production in the malt-fermented liquid be suppressed by fermentation using a RAG⁻ phenotype *Kluyveromyces lactis,* but also the remaining unpleasant odors derived from the wort can be suppressed. For example, one of the unpleasant odors derived from the wort is methional. In the method for producing a malt-fermented liquid according to the present invention, a malt-fermented liquid having an ethanol concentration of less than 0.05 v/v% per 5.0 mass% Brix and a methional concentration of 3.0 ppb or less per 5.0 mass% Brix can be produced. Methional is an aroma component that causes wort odors and decreases as fermentation progresses. A methional concentration of 3.0 ppb or less per 5.0 mass% Brix means that the fermentation has progressed and the wort odors have been sufficiently reduced. That is, according to the present invention, a malt-fermented liquid in which both the ethanol concentration and the methional concentration are sufficiently reduced can be produced.

In the present invention and the present specification, the methional concentration of a malt-fermented liquid or beverage can be determined, for example, from the peak area of a chromatograph obtained by GC (gas chromatography) analysis, GC-MS analysis (gas chromatography-mass spectrometry), or solid-phase microextraction (SPME)-GC-MS/ MS analysis (gas chromatography-triple quadrupole mass spectrometry). The method for quantifying the methional concentration from the peak area is not particularly limited, and examples thereof include the area percentage method, the internal standard method, the standard addition method, and the absolute calibration curve method. Specifically, the methional concentration can be determined by the method described in the following examples.

In the method for producing a malt-fermented liquid according to the present invention, the methional concentration of the malt-fermented liquid can be sufficiently reduced below the methional concentration of the fermentation raw material liquid by a fermentation using a RAG⁻phenotype *Kluyveromyces lactis.* In the present invention, the methional concentration of the malt-fermented liquid can be reduced to preferably 15 mass% or less, more preferably 10 mass% or less, and even more preferably 5 mass% or less of the methional concentration of the fermentation raw material liquid. In other words, according to the method for producing a malt-fermented liquid of the present invention, a malt-fermented liquid with low ethanol content, but also with low methional concentration and suppressed wort odors, can be obtained, resulting in a product with high palatability.

In the present invention, the fermentation raw material liquid to be inoculated with a RAG⁻ phenotype *Kluyveromyces lactis* and fermented is not particularly limited as long as it contains a malt-derived saccharification product and contains a carbon source or nitrogen source that can be assimilated by a RAG⁻ phenotype *Kluyveromyces lactis.* For example, it may consist of only a malt-derived saccharification product, or it may contain a carbon source or nitrogen source other than a malt-derived saccharification product.

In the present invention and the present specification, the term "malt-derived saccharification product" refers to a product that has been obtained by saccharifying sugars in malt with various enzymes. The enzymes used in the saccharification process may be enzymes that are inherently contained in malt, or may be enzymes derived from something other than malt. For example, by adding water to the malt or its crushed product and maintaining the mixture at 50 to 60°C, a saccharification product can be obtained by amylase derived from malt. In this case, a saccharification enzyme derived from something other than malt may be further added, or an enzyme other than the saccharification enzyme, such as a protease, may be used in combination.

In the present invention, for example, wort or malt extract can be used as the malt-derived saccharification product. Malt extract is a concentrated wort, and contains malt sugar as a main component. Malt extract is used either as a beverage by diluting it with carbonated water, or as a raw material for food and beverages. Wort can be concentrated by a conventional method. Concentration under reduced pressure is preferable because it minimizes the impact on the components in the wort, but it is also possible to concentrate by heating to remove the solvent.

The wort is prepared by preparing a mixture containing malt and raw water, heating the mixture, and saccharifying the starch in the malt. It is preferable to use the malt in the form of crushed malt obtained by crushing. The crushing of malt can be carried out using a conventional method. The crushed malt may be subjected to conventional treatments before or after the crushing. Examples of such treatment include root removal.

The mixture containing malt and raw water may contain a fermentation raw material other than the malt. The fermentation raw material may be a grain raw material or a carbohydrate raw material. Examples of the grain raw material other than malt include cereals such as wheat and barley, rice, corn, beans such as soybeans, and tubers. The grain raw material can also be used in the form of crushed grain, grain syrup, grain extract, and the like. The crushed grain may be a product that has been subjected to a conventional treatment before or after the crushing process, such as corn starch, corn grits or the like. Examples of the conventional treatment include removal of proteins, husk and germ, dehydration, and the like. Examples of the carbohydrate raw material include sugars such as liquid sugar or the like.

The wort may be used directly as a fermentation raw material liquid, but it is preferable to carry out a boiling treatment before inoculating the yeast. The boiling treatment can sterilize the wort, and the fermentation can be carried out more safely. When carrying out the boiling treatment, it is preferable to remove insoluble solids by filtration or the like before the boiling treatment. The filtration treatment is not particularly limited, and can be appropriately selected from solid-liquid separation treatments that are generally carried out in the manufacturing process of food and beverages, such as diatomaceous earth filtration and filter filtration. In addition, instead of using the filtrate of the sugar liquid, a mixture of malt extract and warm water may be used, which can also be boiled. The boiling method and conditions can be appropriately determined.

By appropriately adding herbs or the like before or during the boiling treatment, it is possible to produce a malt-fermented liquid having a desired flavor. In particular, it is preferable to add hops before or during the boiling treatment. By carrying out the boiling treatment in the presence of hops, the flavor and aroma components of the hops can be efficiently boiled out. The amount of hops to be added, the manner of addition (e.g., adding in several portions), and the boiling conditions can be determined as appropriate.

It is preferable to remove lees such as proteins generated by precipitation from the boiled wort before inoculating with yeast. The lees may be removed using any solid-liquid separation process, but generally, a tank called a whirlpool is used to remove the sediment. The temperature of the wort during this process should be at least 15°C, and it is generally carried out at around 50 to 80°C. The clear wort (filtrate) after removing the lees is cooled to an appropriate fermentation temperature by a plate cooler or the like. The wort after removing the lees becomes the fermentation raw material liquid.

In the present invention, the Brix of the fermentation raw material liquid into which a RAG⁻ phenotype *Kluyveromyces lactis* is inoculated is preferably 4% to 20%, more preferably 8% to 18%, and even more preferably 12% to 16%. In addition, in the present invention, the pH of the fermentation raw material liquid into which a RAG⁻ phenotype *Kluyveromyces lactis* is inoculated is preferably 3.0 to 6.0, and more preferably 3.5 to 5.5.

In the present invention and the present specification, the Brix value of the fermentation raw material liquid can be measured by a conventional method using measuring devices such as a refractometer (RX-5000α, manufactured by Atago Co., Ltd.).

The cooled fermentation raw material liquid is inoculated with a RAG⁻ phenotype *Kluyveromyces lactis* to carry out fermentation. The cooled fermentation raw material liquid may be subjected to fermentation directly as it is, or may be subjected to fermentation after being adjusted to a desired extract concentration. The amount of the RAG⁻ phenotype *Kluyveromyces lactis* added to the fermentation raw material liquid is not particularly limited. From the viewpoint of sufficient removal of wort odors, the amount of the RAG⁻ phenotype *Kluyveromyces lactis* inoculated into the fermentation raw material liquid is preferably such that the yeast concentration of the malt-fermented liquid at the start of fermentation is 2.0 × 10⁴ cells/mL or more, more preferably within the range of 2.0 × 10⁴ to 2.0 × 10⁷ cells/mL.

If the final cell count of the RAG⁻ phenotype *Kluyveromyces lactis* at the end of the fermentation is too large, there is a risk of producing excessive amounts of ethanol. Conversely, if the final cell count at the end of the fermentation is too small, the fermentation is likely to be insufficient, making it difficult to sufficiently reduce unpleasant odors derived from the wort, such as methional. Considering that it is easier to obtain a malt-fermented liquid with a desired low ethanol concentration and reduced unpleasant odors, the yeast concentration of the malt-fermented liquid at the end of fermentation is preferably 3.0 × 10⁶ cells/mL or more, and more preferably within the range of 3.0 × 10⁶ to 1.4 × 10⁸ cells/mL.

In the method for producing a malt-fermented liquid according to the present invention, the conditions for fermentation carried out by inoculating a RAG⁻ phenotype *Kluyveromyces lactis* are not particularly limited. The fermentation temperature can be any temperature of 1°C or higher. For example, it is preferable to set the temperature within the generally viable range for yeast, which is 1 to 35°C, more preferably 1 to 28°C, even more preferably 1 to 25°C, and even more preferably 1 to 20°C. In addition, the fermentation may be carried out at a constant temperature from the start to the end of the fermentation, or the fermentation temperature may be appropriately changed. The fermentation time can be appropriately determined in consideration of the fermentation temperature and the desired product quality, etc., but is preferably 4 hours or more because it is expected that unpleasant odors derived from the wort such as methional can be sufficiently reduced. In particular, the fermentation time is preferably 4 to 168 hours, more preferably 4 to 96 hours, and even more preferably 4 to 72 hours. In addition, the end of the fermentation can be defined as the point when the concentration of the RAG⁻ phenotype *Kluyveromyces lactis* in the fermentation broth reaches the target level.

In the fermentation using a RAG⁻ phenotype *Kluyveromyces lactis,* the RAG⁻ phenotype *Kluyveromyces lactis* may be in a growth phase, or may be fermented in a state where it is barely growing. For example, at 1°C, the RAG⁻ phenotype *Kluyveromyces lactis* grows only slightly, but by inoculating a sufficient amount of the RAG⁻ phenotype *Kluyveromyces lactis* into the fermentation raw material liquid, a malt-fermented liquid having a desired low ethanol concentration and reduced unpleasant odors can be obtained. On the other hand, even if the amount of inoculation into the fermentation raw material liquid is small, a malt-fermented liquid having a desired low ethanol concentration and reduced unpleasant odors can be obtained by fermenting in an environment where the RAG⁻ phenotype *Kluyveromyces lactis* grows.

In order to achieve sufficient growth of the RAG⁻ phenotype *Kluyveromyces lactis,* it is preferable to carry out the fermentation in an anaerobic environment rather than a completely anaerobic environment. Here, the term "anaerobic environment" refers to conditions where oxygen is not entirely excluded but maintained at a level with a controlled oxygen supply that is below the amount consumed by the yeast growth, resulting in a dissolved oxygen concentration in the liquid phase being zero. In addition, "completely anaerobic environment" refers to an environment with no oxygen supply at all, i.e., conditions where no oxygen is supplied. The completely anaerobic environment can be achieved by supplying oxygen-free gases such as nitrogen gas or carbon dioxide gas into the fermentation tank.

For example, when the number of inoculated cells in the fermentation raw material liquid is less than 3×10⁶ cells/mL, the fermentation can be carried out while maintaining an anaerobic environment under a certain oxygen-supply condition, so that the RAG- phenotype *Kluyveromyces lactis* can be grown to 3.0×10⁶ cells/mL or more, preferably 3.0×10⁶ to 1.4 ×10⁸ cells/mL at the end of the fermentation, and a malt-fermented liquid with a desired low ethanol concentration and reduced unpleasant odors can be obtained. On the other hand, when the number of inoculated cells in the fermentation raw material liquid is 3×10⁶ cells/mL or more, the fermentation may be carried out in an anaerobic environment, and even when the fermentation is carried out in a completely anaerobic environment, it is possible to obtain a malt-fermented liquid with a desired low ethanol concentration and reduced unpleasant odors by adjusting the fermentation time. For example, by inoculating the fermentation raw material liquid with a cell count of 3 × 10⁶ cells /mL or more of the RAG⁻ phenotype *Kluyveromyces lactis* and fermenting the liquid at 1 to 35°C, preferably 1 to 28°C, more preferably 8 to 28°C, and even more preferably 12 to 24°C for 24 hours or more, it is possible to obtain a malt-fermented liquid with a desired low ethanol concentration and reduced unpleasant odors, even when fermented in a completely anaerobic environment.

When the RAG⁻ phenotype *Kluyveromyces lactis* is fermented in an anaerobic environment, it is preferable to carry out the fermentation under oxygen-supply conditions that allow the dissolved oxygen concentration in pure water at atmospheric pressure and 18°C to be increased from 6 ppm to 8 ppm within a time frame of more than 0 hours but not exceeding 5 hours, for example, between 15 minutes and 5 hours, thereby enabling the oxygen concentration to be adjusted within an appropriate range. Fermentation under the oxygen-supply conditions can be carried out by fermenting the fermentation broth while stirring it in a fermentation tank filled with an oxygen-containing gas such as air, rather than directly mixing oxygen into the fermentation broth. Specifically, when the fermentation is carried out in a fermentation tank, the oxygen-supply conditions can be achieved by stirring the fermentation broth while supplying air to the empty space in the fermentation tank, or by pressurizing the fermentation tank to 0.026 MPa and supplying air at a rate of 10 NL/h per 1 kL of the fermentation broth. In addition, when the fermentation is carried out in a laboratory-level fermentation vessel with a small capacity, the above-mentioned oxygen-supply conditions can be achieved, for example, by stirring the fermentation broth with a pump; by placing 400 mL of wort into a 500 mL Erlenmeyer flask and stirring at 60 rpm using a shaking culture device; or by placing 400 mL of wort into a 500 mL jar fermenter equipped with a 0.2 µm filter attached to the exhaust port and rotating the stirring blade at 50 rpm without actively supplying air. Alternatively, the above-mentioned oxygen-supply conditions can also be achieved by allowing the mixture to stand in a fermentation vessel with a wide gas-liquid contact surface.

The malt-fermented liquid obtained in the present invention can be directly used as a raw material for food and beverages. The food and beverages produced using the malt-fermented liquid as a raw material are not particularly limited. As the food and beverages produced using the malt-fermented liquid obtained in the present invention as a raw material, a beverage is preferable, a malt-fermented beverage is more preferable, and a malt-fermented beer-like sparkling beverage is even more preferable.

In the present invention and the present specification, the term "malt-fermented beverage" refers to a beverage produced by using malt or a processed product thereof as a raw material and undergoing a fermentation process with a yeast. The malt-fermented beverage may be an alcoholic beverage, or may be a so-called non-alcoholic beverage or low-alcohol beverage having an ethanol concentration of less than 1.0 v/v%. The malt-fermented beverage produced by using the malt-fermented liquid obtained in the present invention as a raw material has an ethanol concentration of less than 0.05 v/v%, preferably 0.025 v/v% or less, more preferably 0.01 v/v% or less, even more preferably 0.008 v/v% or less, and even more preferably 0.005 v/v% or less.

Examples of the malt-fermented beverage include beer-like sparkling beverages. In the present invention and the present specification, the term "beer-like sparkling beverage" refers to a sparkling beverage having a flavor, taste, and texture similar to or comparable to beer, and having beer-like characteristics (flavor reminiscent of beer). Specific examples of the malt-fermented beer-like sparkling beverage include beer and happoshu made from malt as the raw material. In addition, the beverage may be a liqueur obtained by blending a malt-fermented liquid with an ethanol-containing distilled liquid. The ethanol-containing distilled liquid is a solution containing ethanol obtained by a distillation operation, and may be, for example, raw material alcohol (ethanol), or distilled alcohol (spirits) such as whiskey, brandy, vodka, rum, tequila, gin, shochu, or the like.

For example, the obtained malt-fermented liquid can be subjected to solid-liquid separation treatment to remove yeast and the like, thereby obtaining a malt-fermented beverage. The solid-liquid separation treatment may be any method capable of removing yeast and the like, and examples of the solid-liquid separation treatment include centrifugation treatment, diatomaceous earth filtration treatment, and filter filtration treatment using a filter having an average pore size of about 0.4 to 0.5 µm, and these treatments may be combined. In addition, hops, hop extract, flavorings, and the like may be added to the obtained malt-fermented liquid to adjust the flavor of the malt-fermented beverage. The flavor adjustment may be carried out before the solid-liquid separation treatment or after the solid-liquid separation treatment. In addition, the malt-fermented liquid after the solid-liquid separation treatment may be stored under low-temperature conditions of about 0°C for aging. In order to produce a malt-fermented beverage, for example, a pH adjustment treatment, a heat treatment, or the like may be carried out according to a conventional method.

The obtained malt-fermented liquid can be appropriately diluted to produce a malt-fermented beverage having an extract concentration or the like within a desired range. The solution used for dilution is not particularly limited, but examples thereof include water or carbonated water. The dilution ratio is not particularly limited, and can be, for example, 2 to 10 times, more preferably 2 to 6 times, and even more preferably 2 to 4 times. In addition, the malt-fermented beverage can be produced by diluting the original wort extract so that the concentration is within a desired range, for example, 3 to 7 mass%. The step of diluting the malt-fermented liquid may be carried out after the fermentation step is completed, or after the yeast and the like are removed, or on the malt-fermented liquid after aging.

The original wort extract concentration of malt-fermented liquid or malt-fermented beverage can be measured according to the method stipulated in the analytical method published by the Japan Brewing Society ("8.5 Extract-related Measurement Method" in "BCOJ Beer Analysis Method (2013 revised edition) (Edited by the Brewers Association of Japan International Technical Committee (Analysis Committee)). Specifically, it can be measured from the alcohol concentration and true extract concentration.

The true extract concentration of the malt-fermented liquid or the malt-fermented beverage can be measured according to the method specified in "8.4.3 Alcolyzer Method" in "BCOJ Beer Analysis Method (2013 revised edition)" (Edited by the Brewers Association of Japan International Technical Committee (Analysis Committee)).

The ethanol concentration of the malt-fermented beverage obtained by using the malt-fermented liquid obtained in the present invention as a raw material is not particularly limited. By using the malt-fermented liquid obtained in the present invention as a raw material, a malt-fermented beverage having a low ethanol concentration and reduced wort odors can be produced. As the malt-fermented beverage, for example, a malt-fermented beverage having an ethanol concentration of 0.05 v/v% or less per 5.0 mass% Brix is preferable, a malt-fermented beer-like sparkling beverage having an ethanol concentration of 0.05 v/v% or less and a methional concentration of 3.0 ppb or less per 5.0 mass% Brix is more preferable, a malt-fermented beer-like sparkling beverage having an ethanol concentration of 0.01 v/v% or less and a methional concentration of 3.0 ppb or less per 5.0 mass% Brix is even more preferable, and a malt-fermented beer-like sparkling beverage having an ethanol concentration of 0.01 v/v% or less and a methional concentration of 1.0 ppb or less per 5.0 mass% Brix is even more preferable.

### Examples

The present invention will be described in more detail with reference to the Examples and the Reference Examples, but the present invention is not limited to the following Examples.

### <Measurement of ethanol concentration>

In the following experiments, unless otherwise specified, the ethanol concentration in the malt-fermented liquid or beverage was measured by the following method.

The sample was diluted with distilled water to an ethanol concentration of 0.5 to 2.0 v/v%, and the solution was measured using a multifunctional biosensor (BF-5, Oji Instruments & Instruments Co., Ltd.). The ethanol concentration (v/v%) in the sample was determined by multiplying the measured value by the dilution rate.

The multifunctional biosensor is a device that electrochemically detects hydrogen peroxide (H₂O₂) produced by oxidation with alcohol oxidase, and can measure the total concentration of methanol and ethanol. Since yeast does not synthesize methanol, malt-fermented liquid contains only trace amounts of methanol that are within the margin of error. Therefore, the measurement value obtained by the multifunctional biosensor is the measurement value of the amount of ethanol in the malt-fermented liquid sample.

For samples with an ethanol concentration of less than 0.5 v/v%, this multifunctional biosensor was used to measure the ethanol concentration of a solution obtained by diluting the sample to an alcohol concentration of 0.01 to 0.04 v/v%, using a highly sensitive measurement method that uses a sodium azide-free buffer solution (SL04-0015, Oji Instruments & Instruments Co., Ltd.).

### <Analysis of Methional>

In the following experiments, unless otherwise specified, the concentration of methional in the fermentation raw material liquid, malt-fermented liquid or beverage was quantified by GC-MS analysis. The MRM transitions used for the analysis are shown in Table 1.

**[Table 1]**

| | Precursor ion (m/z) | Product ion (m/z) | CE (V) |
|---|---|---|---|
| Quantitative ion | 299 | 85 | 15 |
| Confirmatory ion | 102 | 47 | 25 |

Specifically, the measurements were carried out by solid-phase microextraction (SPME)-GC-MS/MS as follows. 100 µL of o-(2,3,4,5,6-pentafluorobenzyl) hydroxylamine.HCl (PFBOA), adjusted to a concentration of 6 g/L, was added to a vial containing 10 mL of hexane-washed water, and the resulting solution was used as a derivatization reagent. A SPME fiber (PDMS/DVB: 65 µm, 1 cm, 57327-U 24 gauge StableFlex, manufactured by SPELCO) was exposed to the headspace of the vial containing the PFBOA solution at 50°C for 10 minutes. The SPME fiber with PFBOA trapped was then exposed to the headspace of a vial containing 10 g of the sample and 50 µL of Methional-d3 dissolved in ethanol to a concentration of 5 mg/L, at 50°C for 60 minutes. The derivatized methional was analyzed under the following GC-MS/MS conditions.

### <GC-MS/MS conditions>

Apparatus: GC-MS/MS (7890A/7000C, Agilent Technologies) equipped with a multifunction autosampler MPS2 system (Gerstel)
Column: HP-5MS UI 30 m × 0.25 mm × 0.25 µm (Agilent Technologies)
Carrier gas: Helium
Flow rate: 1mL/min
Temperature rise conditions: 80°C (5 min) → 15°C/min → 150°C → 5°C/min → 220°C → 50°C/min → 300°C (5 min)
Injection method: Splitless
Purge flow: 50 mL/min for 1 min
Inlet temperature: 250°C
Pressure: 9.3825 psi
Transfer line: 320°C
Ionization: Electron ionization method (70 eV)
Ion source temperature: 250°C
Quadrupole temperature: 150°C
He quench gas flow rate: 2.25 mL/min
N2 collision gas flow rate: 1.5 mL/min
MRM transitions: (see Table 1)

### <Brix measurement>

In the following experiments, unless otherwise specified, the Brix of the fermentation raw material liquid, the malt-fermented liquid or beverage was measured using a digital refractometer (RX-5000α, Atago Co., Ltd.).

### <pH measurement>

In the following experiments, unless otherwise specified, the pH of the fermentation raw material liquid, the malt-fermented liquid or the beverage was measured using a pH meter (LAQUAtwin-pH-33, manufactured by Horiba).

### <Preparation of wort A and wort D >

Wort A and wort D were produced using a 200 L scale brewing facility. First, 40 kg of crushed malt and starch-based auxiliary materials as fermentation raw materials and 160 L of raw water were charged into the brewing tank. Next, the mixture in the brewing tank was heated and saccharified in a conventional manner, and the resulting saccharified liquid was filtered. Hops were added to the resulting filtrate, which was then boiled. The boiled filtrate was transferred to a settling tank to separate and remove the precipitate, after which the pH was adjusted with phosphoric acid and cooled to obtain wort A and wort D. The analytical values of the resulting wort A and wort D were as shown in Table 2.

**[Table 2]**

| | Wort A | Wort D |
|---|---|---|
| Brix | 12.0 % | 9.0 % |
| Fructose | 0.32 % | 0.30 % |
| Glucose | 1.02 % | 1.57 % |
| Total sugar concentration | 11.9 % | 8.8 % |
| pH | 3.92 | 4.39 |

### <Preparation of worts B and C >

The commercially available malt extracts shown in Table 3 were diluted with water and mixed to obtain wort B and wort C having the Brix and pH shown in Table 3, respectively.

**[Table 3]**

| Wort | Manufacturer | Malt extract name | Malt extract Brix (%) | pH |
|---|---|---|---|---|
| B | Coopers | MALT extract (Non diastatic) | 81.8 | 5.21 |
| C | Brew Maker | Maltax 10 | 80-82 | 5.2-6.0 |

### [Reference Example 1]

Pure water was incubated at 18°C and atmospheric pressure under the following oxygen supply conditions, and the dissolved oxygen concentration was measured.

Oxygen-supply condition 1: 400 mL of pure water was placed in a 500 mL Erlenmeyer flask and stirred at 60 rpm in a shaking incubator.

Oxygen-supply condition 2: 400 mL of pure water was placed in a 500 mL jar fermenter, a 0.2 µm filter was attached to the exhaust port, and the stirring blades were rotated at 50 rpm without actively supplying air.

Oxygen supply condition 3: 100 L of pure water was placed in a 200 L fermentation tank, pressurized to 0.026 MPa, and air was supplied at a rate of 0.67 NL/min per 100 L of pure water.

Oxygen-supply condition 4: 400 mL of pure water was placed in a 500 mL jar fermenter, a 0.2 µm filter was attached to the exhaust port, and nitrogen gas was blown in while the stirring blades were rotated at 50 rpm (completely anaerobic conditions).

The results of measuring the dissolved oxygen concentration over time under each condition are shown in Figure 1. As a result, under oxygen-supply conditions 1 to 3, the time required to increase the dissolved oxygen concentration of pure water from 6.0 ppm to 8.0 ppm at 18°C and atmospheric pressure was more than 0 hours and not more than 5 hours. On the other hand, under oxygen-supply condition 4, since no oxygen was supplied, the dissolved oxygen concentration of the pure water was maintained at 0 ppm.

### [Example 1]

Wort was fermented in flasks using various yeasts, and the concentration of the yeast, ethanol concentration, and methional concentration of the resulting fermentation broth were examined.

### <Yeast>

*Kluyveromyces lactis* strain NBRC648, *Kluyveromyces lactis* strain NBRC1267, *Kluyveromyces lactis* strain NBRC1090TS, *Lipomyces starkeyi* strain NBRC10381TS, *Lipomyces lipofer* strain NBRC1288TS, *Yarrowia lipolytica* strain NBRC717, *Rhodotorula gluntinis* strain NBRC1125TS, *Saccharomycodes ludwigii* strain NBRC798TS, and *Torulaspora delbrueckii* strain NBRC955TS were used. Strains with "TS" at the end of their names are type strains.

Of the three *Kluyveromyces lactis* strains used, *Kluyveromyces lactis* strain NBRC648 has RAG⁻ phenotype, while *Kluyveromyces lactis* strain NBRC1267 and *Kluyveromyces lactis* strain NBRC1090TS do not have RAG⁻ phenotype and are capable of growing even in the presence of respiratory inhibitors.

### <400mL scale test>

Wort A was used as the fermentation raw material liquid. First, each yeast was pre-cultured overnight in a wort diluted with water to a Brix of 5 mass%. After being washed with water once, the yeast was added to 400 mL of wort (Brix: 12.0%) placed in a 500 mL Erlenmeyer flask so that the initial yeast cell count was 1.0 × 10⁶ per mL of wort. The yeast-inoculated wort was then shaking cultured in an incubator at 60 rpm, 18°C, and atmospheric pressure, for 3 days. The resulting fermentation broth was then quantified for yeast concentration, ethanol concentration, and methional concentration.

In addition, when 400 mL of pure water was placed in a 500 mL Erlenmeyer flask and incubated at 18°C and atmospheric pressure while stirring at 60 rpm in an incubator, it took 135 minutes for the dissolved oxygen concentration of the pure water to increase from 6.0 ppm to 8.0 ppm.

The quantitative results of the yeast concentration, ethanol concentration, and methional concentration of the fermentation broth are shown in Table 4. In the table, "KL" stands for *Kluyveromyces lactis,* "LS" stands for *Lipomyces starchii,* "LL" stands for *Lipomyces lipofusa,* "YL" stands for *Yarrowia lipolytica,* "RG" stands for *Rhodotorula gluntis,* "SL" stands for *Saccharomycodes ludwigii,* and "TB" stands for *Torulaspora delbrueckii.* In addition, the term "final cell count (cells/mL)" refers to the yeast concentration of the fermentation broth at the end of fermentation, the term "ethanol (% ABV)" refers to the ethanol concentration (v/v%) of the fermentation broth at the end of fermentation, the term "ethanol/equivalent to 5% Brix (% ABV)" refers to the ethanol concentration (v/v%) per 5.0 mass% Brix of the fermentation broth at the end of fermentation, the term "methional (ppb)" refers to the methional concentration (ppb) of the fermentation broth at the end of fermentation, and the term "methional/equivalent to 5% Brix (ppb)" refers to the methional concentration (ppb) per 5.0 mass% Brix of the fermentation broth at the end of fermentation. However, in the "No inoculation" column, the term "methional concentration (ppb)" refers to the methional concentration (ppb) of the fermentation raw material liquid (wort before inoculation), and the term "methional/equivalent to 5% Brix (ppb)" refers to the methional concentration (ppb) per 5.0 mass% Brix of the fermentation raw material liquid. Also, the term "methional reduction rate (%)" refers to the reduction rate of the methional concentration from the fermentation raw material liquid (100% - [methional concentration (ppb) per 5.0 mass% Brix of the fermentation broth at the end of fermentation] / [methional concentration (ppb) per 5.0 mass% Brix of the fermentation raw material liquid] × 100%).

**[Table 4]**

| Yeast species | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|
| No inoculation | - | - | - | 32.85 | 13.69 | - |
| KLNBRC648 | 1.29.E+07 | 0.009 | 0.004 | 2.34 | 0.98 | 92.87 |
| KLNBRC1267 | 8.88.E+07 | 0.420 | 0.175 | 2.30 | 0.96 | 92.99 |
| KLNBRC1090TS | 4.39.E+07 | 0.250 | 0.104 | 2.96 | 1.23 | 90.98 |
| LSNBRC10381TS | 1.70.E+06 | 0.001 | 0.000 | 23.51 | 9.80 | 28.42 |
| LLNBRC1288TS | 3.50.E+06 | 0.002 | 0.001 | 5.58 | 2.33 | 83.01 |
| YL NBRC717 | 1.25.E+07 | 0.021 | 0.009 | 16.74 | 6.97 | 49.04 |
| RG NBRC 1125TS | 2.32.E+06 | 0.003 | 0.001 | 7.4 | 3.09 | 77.43 |
| SL NBRC798TS | 1.83.E+07 | 0.780 | 0.325 | 1.25 | 0.52 | 96.20 |
| TD NBRC955TS | 1.02.E+08 | 0.600 | 0.250 | 1.44 | 0.60 | 95.62 |

As shown in Table 4, all of the yeasts produced fermentation broths with low ethanol concentrations, similar to *Saccharomycodes ludwigii,* which is commercially used in the production of non-alcoholic beer, but in particular, *Kluyveromyces lactis* strain NBRC648, *Lipomyces starchii* strain NBRC10381TS, *Lipomyces lipofus* strain NBRC1288TS, *Yarrowia lipolytica* strain NBRC717, and *Rhodotorula gluntis* strain NBRC1125TS had very low ethanol concentrations of less than 0.05 v/v % per 5.0% Brix. Among these, the fermentation broths fermented with *Kluyveromyces lactis* strain NBRC648 and *Lipomyces lipofus* strain NBRC1288TS had methional reduction rates of 80% or more, and the fermentation was sufficient.

All of the fermentation broths fermented with the three strains of *Kluyveromyces lactis* had a methional reduction rate of 90% or more, indicating that fermentation had been carried out sufficiently. However, only *Kluyveromyces lactis* strain NBRC648, which is Rag⁻ phenotype, was able to reduce the ethanol concentration (v/v%) per 5.0 mass% Brix to 0.05 v/v% or less.

<Sensory evaluation>

Sensory evaluation was carried out by five experienced panelists using a 2.56-fold diluted liquid (malt-fermented beer-like sparkling beverage) as the evaluation sample, using a 1-7 point SD method (semantic differential method) (Frey, The SAGE Encyclopedia of Educational Research, Measurement, and Evaluation, "Semantic Differential Scaling", 2018, p. 1504-1507). The evaluation items were (a) intensity of wort odors and (b) palatability. (a) was evaluated by aroma, and (b) by taste. Each evaluation sample was 20 mL, and the order of evaluation was randomized so that it was different for each panelist.

For item (a), water was used as the sample at point 1, and wort A was used at point 7 for evaluation.

For item (b), wort A was used as the control (point 3), and the scoring was conducted accordingly.

**[Table 5]**

| Yeast | (a) Intensity of wort odors | | (b) Palatability | | |
|---|---|---|---|---|---|
| | Average score | *p* value | Average score | *p* value | Free comments |
| Water | 1.0 | | | | - |
| Wort | 7.0 | | 3.0 | | - |
| KL NBRC648 | 2.3 | 0.7 | 5.2 | 0.2 | Mild, refreshing, sour |
| KL NBRC1267 | 2.7 | 0.3 | 4.5 | 0.1 | Mild, diacetyl, ester |
| KL NBRC1090TS | 3.7 | 0.1 | 4.2 | 0.0 | Diacetyl, sweet, slight wort smell |
| LS NBRC10381TS | 4.7 | 0.0 | 4.2 | 0.0 | Wort smell, sweet, barley |
| LL NBRC1288TS | 4.0 | 0.0 | 4.0 | 0.0 | Wort smell, sweet, bitter, ester |
| YL NBRC717 | 3.2 | 0.0 | 3.5 | 0.0 | Chemical smell, slight wort smell, watery |
| RG NBRC1125TS | 2.7 | 0.3 | 4.7 | 0.0 | Slight wort smell, sweet, refreshing |
| SL NBRC798TS | 2.2 | 1.0 | 5.8 | 1.0 | Beer-like, ester, full-bodied |
| TD NBRC955TS | 2.3 | 0.7 | 5.7 | 0.8 | Beer-like, ester, refreshing |

The results of the sensory evaluation are shown in Table 5. The diluted fermentation broths of *Kluyveromyces lactis* strain NBRC648, *Kluyveromyces lactis* strain NBRC1267, *Kluyveromyces lactis* strain NBRC1090TS, *Lipomyces lipofus* strain NBRC1288TS, and *Rhodotorula gluntis* strain NBRC1125TS, which had low methional concentrations (ppb) per 5.0 mass% Brix of the fermentation raw material liquid, had weak wort odors and were highly rated for palatability. In particular, the diluted solution of the fermentation broth fermented with *Kluyveromyces lactis* strain NBRC648 had a high palatability rating of 5 or more, similar to the diluted solution of the fermentation broth fermented with *Saccharomycodes ludwigii,* and had an extremely low ethanol concentration of 0.004 v/v% per 5.0 mass% Brix, making it a mild, refreshing, easy-to-drink beer-like sparkling beverage.

### [Example 2]

Wort was fermented in flasks using various RAG⁻ phenotypes of *Kluyveromyces lactis,* and the yeast concentration, ethanol concentration, and methional concentration of the resulting fermentation broth were examined.

### <Yeast>

As the RAG⁻ phenotype *Kluyveromyces lactis,* the strains shown in Table 6, which were bred from *Kluyveromyces lactis* strain NBRC648 and/or strain NBRC1267, were used. In the table, "KL" is an abbreviation for *"Kluyveromyces lactis".*

### <Acquisition of KL No. 86>

90 mL of wort was placed in a 100 mL Erlenmeyer flask, and strain NBRC648 (pre-cultured cells) was inoculated at a density of 2×10⁶ cells/mL. The culture was incubated for 2 days at 18°C on a rotary shaker at 60 rpm, repeated 5 times. The resulting cells were spread on a YM agar medium, placed in a sealed container together with Anaeropack Microaerobic (manufactured by Mitsubishi Gas Chemical Co., Ltd.), and cultured for 5 days at 25°C. Among the colonies formed on the agar medium, colonies with the fastest growth were selected.

### <Acquisition of KL P13 and KL P15>

KL NBRC648 was suspended in pure water to a concentration of 1×10⁸ cells/mL to obtain a suspension. 100 µL of the suspension was inoculated onto a parafluorophenylalanine-containing agar medium (0.67% Yeast Nitrogen Base w/o Amino Acids, 2% Glucose, 1.0 mg/mL parafluorophenylalanine, 2% agar) and cultured at 25°C for 4 days. From the colonies that appeared on the agar medium, strains that produced a large amount of aroma component (β-phenethyl alcohol) were selected.

### <Acquisition of KL 648 × 1267-2C, KL 648 × 1267-4A, and KL 648 × 1267-5B>

Among the spores obtained by conjugating strain NBRC648 with strain KL NBRC1267 that does not have RAG⁻ phenotype, a strain having RAG⁻ phenotype was selected.

### <Acquisition of KL 1267-R6 and KL 1267-R33>

Strain KL NBRC1267 was treated with 0.3% ethyl methanesulfonate at 30°C for 60 minutes to achieve a viable cell rate of 38%. The treated cells were inoculated onto YPD agar medium to allow approximately 100 colonies to grow, followed by replica plating onto agar medium containing antimycin A (0.5% yeast extract, 1% peptone, 5% glucose, 5 µM antimycin A, 2% agar). Strains capable of growth on YPD agar medium but unable to grow on the agar medium containing antimycin A were selected.

**[Table 6]**

| Strain | Breeding method |
|---|---|
| KL NBRC648 | |
| KL No.86 | Semi-anaerobic condition resistant strain derived from NBRC648 |
| KL P13 | Parafluorophenylalanine resistant strain derived from NBRC648 |
| KL P15 | Parafluorophenylalanine resistant strain derived from NBRC648 |
| KL 648×1267-2C | Cross-bred strain with RAG-phenotype obtained by conjugating NBRC648 with KL NBRC1267 strain that does not have RAG-phenotype |
| KL 648×1267-4A | Cross-bred strain with RAG-phenotype obtained by conjugating NBRC648 with KL NBRC1267 strain that does not have RAG-phenotype |
| KL 648×1267-5B | Cross-bred strain with RAG-phenotype obtained by conjugating NBRC648 with KL NBRC1267 strain that does not have RAG-phenotype |
| KL 1267-R6 | KL NBRC1267 strain was treated with EMS mutagen until the viable cell rate reached 38%, and strains that could not grow on 5µM antimycin A-containing medium were selected by a replica plate method, and the strain acquired RAG-phenotype |
| KL 1267-R33 | KL NBRC1267 was treated with EMS mutagen until the viability rate reached 38%, and the strains that could not grow on a medium containing 5 µM antimycin A were selected by replica plating. These strains acquired RAG- phenotype |

### <400 mL scale test>

In the same manner as in Example 1, the pre-cultured yeast was inoculated into the worts to achieve an initial cell count of 1.0×10⁶ cells per mL of wort, and fermentation was carried out by shaking culture at 18°C and atmospheric pressure for 3 days. The cell concentration (final cell count), ethanol concentration, and methional concentration of the obtained fermentation broths were quantified. The results are shown in Table 7.

**[Table 7]**

| Yeast species | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|
| No inoculation | - | - | - | 32.85 | 13.69 | - |
| KLNBRC648 | 9.76E+06 | 0.003 | 0.001 | 1.8 | 0.77 | 94.38 |
| KL No.86 | 1.38E+07 | 0.007 | 0.003 | 1.6 | 0.66 | 95.21 |
| KL P13 | 7.07E+06 | 0.004 | 0.002 | 1.5 | 0.62 | 95.49 |
| KL P15 | 7.52E+06 | 0.004 | 0.002 | 1.7 | 0.70 | 94.89 |
| KL 648×1267-2C | 1.33E+07 | 0.002 | 0.001 | 1.7 | 0.69 | 94.96 |
| KL 648×1267-4A | 1.99E+07 | 0.003 | 0.001 | 1.6 | 0.65 | 95.26 |
| KL 648×1267-5B | 1.46E+07 | 0.002 | 0.001 | 1.4 | 0.60 | 95.59 |
| KL 1267-R6 | 2.02E+07 | 0.039 | 0.016 | 2.8 | 1.18 | 91.41 |
| KL 1267-R33 | 2.86E+07 | 0.003 | 0.001 | 1.5 | 0.62 | 95.45 |

The fermentation broths obtained from all of the breeding strains had an ethanol concentration of less than 0.05 v/v% per 5.0 mass% Brix, and the methional concentration was reduced by 85 mass% or more compared to wort A, and further, the methional concentration was 3 ppb or less per 5.0 mass% Brix. These results confirmed that using the *Kluyveromyces lactis* having RAG⁻ phenotype, it is possible to prepare a malt-fermented broth with a low alcohol concentration and a low methional concentration.

### [Example 3]

Worts with different compositions and Brix were fermented using a RAG⁻ phenotype *Kluyveromyces lactis* as fermentation raw material liquids, and the yeast concentration, ethanol concentration, and methional concentration of the resulting fermentation broths were examined. *Kluyveromyces lactis* strain NBRC648 was used as the RAG⁻ phenotype *Kluyveromyces lactis.*

(1) The same procedure as in Example 1 was followed except that wort A was replaced with the worts with the Brix values shown in Table 8. The pre-cultured yeast was inoculated into the worts to achieve an initial cell count of 1.0×10⁶ per mL of wort, and fermentation was carried out by shaking culture at 18°C and atmospheric pressure for 3 days. The yeast concentration (final cell count), ethanol concentration, and methional concentration of the obtained fermentation broths were quantified. The results are shown in Table 8.

**[Table 8]**

| Yeast species | Wort (Brix) | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|
| No inoculation | Wort B (12.0%) | - | - | - | 197.0 | 82.09 | - |
| NBRC648 | | 3.63E+07 | 0.011 | 0.005 | 7.0 | 2.91 | 96.45 |
| No inoculation | Wort C (12.0%) | - | - | - | 167.7 | 69.87 | - |
| NBRC648 | | 2.63E+07 | 0.006 | 0.003 | 5.9 | 2.48 | 96.46 |

Regardless of whether wort B or wort C was used, similar to the case of using wort A, the ethanol concentration per 5.0 mass% Brix was less than 0.05 v/v%, and the methional concentration was reduced by 85 mass% or more compared to the wort before yeast inoculation. Furthermore, it was possible to prepare a malt-fermented liquid having a methional concentration of 3 ppb or less per 5.0 mass% Brix.

(2)
The same procedure as in (1) described above was followed except that worts obtained by adjusting wort B to the Brix values shown in Table 9 were used instead of wort A. The pre-cultured yeast was inoculated into the worts to achieve a yeast cell count of 1.0×10⁶ per mL of wort, and fermentation was carried out by shaking culture at 18°C and atmospheric pressure for 3 days. The yeast concentration (final cell count), ethanol concentration, and methional concentration of the obtained fermentation broths were quantified. The results are shown in Table 9.

**[Table 9]**

| Yeast species | Brix of Wort B | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|
| No inoculation | 12.0% | - | - | - | 197.0 | 69.87 | - |
| NBRC648 | 4.0% | 2.63E+07 | 0.01 | 0.013 | 1.5 | 1.91 | 95.3 |
| NBRC648 | 8.0% | 3.27E+07 | 0.012 | 0.008 | 4.1 | 2.57 | 97.3 |
| NBRC648 | 12.0% | 3.63E+07 | 0.011 | 0.005 | 7.0 | 2.91 | 97.2 |
| NBRC648 | 16.0% | 4.40E+07 | 0.012 | 0.004 | 9.0 | 2.82 | 98.0 |
| NBRC648 | 20.0% | 4.06E+07 | 0.014 | 0.004 | 10.8 | 2.70 | 98.2 |

Regardless of the Brix value of the fermentation raw material liquid, the obtained malt-fermented liquid had an ethanol concentration of less than 0.05 v/v% per 5.0 mass% Brix, and the methional concentration was reduced by 85 mass% or more compared to the wort before yeast inoculation, and further, the methional concentration per 5.0 mass% Brix was 3 ppb or less.

### [Example 4]

The cell count of the RAG-phenotype *Kluyveromyces lactis* inoculated into the fermentation raw material liquid and the final cell count were varied, and the yeast concentration, ethanol concentration, and methional concentration of the resulting fermentation broth were examined. *Kluyveromyces lactis* strain NBRC648 was used as the RAG⁻ phenotype *Kluyveromyces lactis,* and wort A was used as the fermentation raw material liquid.

The same procedure as in Example 1 was followed except that the culture time, culture scale, and initial cell count were as shown in Table 10. The pre-cultured yeast was inoculated into the worts in Erlenmeyer flasks to achieve an initial cell count of 1.0×10⁶ cells per mL of wort, and fermentation was carried out by shaking culture at an incubator speed of 60 rpm at 18°C and atmospheric pressure. The yeast concentration (final cell count), ethanol concentration, and methional concentration of the obtained fermentation broths were quantified. The results are shown in Table 10.

In the table, the "culture scale" of "160/200 mL" and "160/500 mL" indicate that 160 mL of wort was placed in a 200 mL Erlenmeyer flask or a 500 mL Erlenmeyer flask, respectively, and the wort was inoculated with a yeast.

In addition, when 160 mL of pure water was placed in a 500 mL Erlenmeyer flask and incubated at 18°C and atmospheric pressure while stirring at 60 rpm in an incubator, it took 1 hour for the dissolved oxygen concentration of the pure water to increase from 6.0 ppm to 8.0 ppm. When 160 mL of pure water was placed in a 200 mL Erlenmeyer flask and incubated at 18°C and atmospheric pressure while stirring at 60 rpm in an incubator, it took 160 minutes for the dissolved oxygen concentration of the pure water to increase from 6.0 ppm to 8.0 ppm.

**[Table 10]**

| Culture time (days) | Culture scale | Initial cell count (cells/mL) | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|---|
| 0 | | - | - | - | - | 32.85 | 13.69 | - |
| 1 | 160/200 mL | 2.00E+04 | 7.44E+05 | 0.001 | 0.000 | 31.8 | 13.23 | 3.30 |
| 2 | 160/200 mL | 2.00E+04 | 2.31E+06 | 0.001 | 0.000 | 15.2 | 6.33 | 53.73 |
| 3 | 160/200 mL | 2.00E+04 | 5.55E+06 | 0.002 | 0.001 | 2.4 | 0.98 | 92.81 |
| 1 | 160/200 mL | 2.00E+05 | 3.65E+06 | 0.002 | 0.001 | 1.9 | 0.78 | 94.29 |
| 2 | 160/200 mL | 2.00E+05 | 9.68E+06 | 0.002 | 0.001 | 1.7 | 0.70 | 94.86 |
| 3 | 160/200 mL | 2.00E+05 | 1.25E+07 | 0.002 | 0.001 | 1.6 | 0.67 | 95.09 |
| 3 | 160/200 mL | 1.00E+06 | 1.57E+07 | 0.006 | 0.003 | 1.30 | 0.54 | 96.04 |
| 3 | 160/200 mL | 5.00E+06 | 1.68E+07 | 0.015 | 0.006 | 1.56 | 0.65 | 95.25 |
| 3 | 160/200 mL | 2.00E+07 | 2.90E+07 | 0.010 | 0.004 | 1.5 | 0.61 | 95.52 |
| 4 | 160/200 mL | 2.00E+07 | 5.46E+07 | 0.010 | 0.004 | 1.1 | 0.45 | 96.69 |
| 5 | 160/200 mL | 2.00E+07 | 6.53E+07 | 0.010 | 0.004 | 1.4 | *0.56* | 95.89 |
| 6 | 160/200 mL | 2.00E+07 | 9.11E+07 | 0.013 | 0.005 | 1.3 | *0.55* | 95.98 |
| 4 | 160/500 mL | 2.00E+07 | 1.06E+08 | 0.044 | 0.018 | 1.02 | 0.43 | 96.88 |
| 5 | 160/500 mL | 2.00E+07 | 9.23E+07 | 0.070 | 0.029 | 0.96 | 0.40 | 97.07 |
| 6 | 160/500 mL | 2.00E+07 | 1.29E+08 | 0.096 | 0.040 | 0.94 | 0.39 | 97.13 |
| 7 | 160/500 mL | 2.00E+07 | 1.45E+08 | 0.125 | 0.052 | 1.02 | 0.43 | 96.88 |
| 8 | 160/500 mL | 2.00E+07 | 1.62E+08 | 0.150 | 0.063 | 0.89 | 0.37 | 97.29 |

In Table 10, the column with the culture time of 0 days shows the measurement results of the fermentation raw material liquid (wort) before yeast inoculation. As shown in Table 10, in the fermentation broth in which the final cell count was less than 3.0×10⁶ cells/mL, the reduction rate of methional was 60% or less, and fermentation was insufficient. On the other hand, in the fermentation broth in which the final cell count was more than 1.4×10⁸ cells/ mL, the ethanol concentration per 5.0 mass% Brix was more than 0.05 v/v%, and the amount of ethanol produced was large. In the fermentation broth in which the final cell count was 3.0×10⁶ to 1.4×10⁸ cells/mL, regardless of the initial cell count and the number of days of fermentation, the ethanol concentration per 5.0 mass% Brix was 0.05 v/v% or less and the methional reduction rate was 90% or more, and a good malt-fermented liquid with low alcohol and low methional was obtained.

### [Example 5]

The fermentation raw material liquid was inoculated with a RAG⁻ phenotype *Kluyveromyces lactis* and the fermentation time was changed, and the yeast concentration, ethanol concentration, and methional concentration of the resulting fermentation broths were examined. *Kluyveromyces lactis* strain NBRC648 was used as the RAG⁻ phenotype *Kluyveromyces lactis,* and wort A was used as the fermentation raw material liquid.

160 mL of wort was placed in a 200 mL Erlenmeyer flask, and the number of days of culture and the initial cell count were set as shown in Table 11. The same procedure as in Example 1 was followed, except that the pre-cultured yeast was inoculated into the wort placed in an Erlenmeyer flask to achieve an initial cell count of 1.0×10⁶ per mL of wort, and fermentation was carried out by shaking culture at an incubator speed of 60 rpm at 18°C and atmospheric pressure. The yeast concentration (final cell count), ethanol concentration, and methional concentration of the obtained fermentation broths were quantified. The results are shown in Table 11.

**[Table 11]**

| Culture time (hours) | Initial cell count (cells/mL) | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|
| 0 | - | - | - | - | 32.85 | 13.69 | - |
| 1 | 3.00E+06 | 6.38.E+06 | 0.006 | 0.003 | 9.50 | 3.96 | 71.08 |
| 4 | 3.00E+06 | 6.96.E+06 | 0.009 | 0.004 | 4.37 | 1.82 | 86.70 |
| 6.5 | 3.00E+06 | 7.02.E+06 | 0.015 | 0.006 | 2.90 | 1.21 | 91.17 |
| 24 | 3.00E+06 | 8.37E+06 | 0.012 | 0.005 | 1.40 | 0.58 | 95.74 |
| 72 | 3.00E+06 | 1.69E+07 | 0.013 | 0.005 | 1.40 | 0.58 | 95.74 |

In Table 11, the column with the culture time of 0 hours indicates the measurement results of the fermentation raw material liquid (wort) before yeast inoculation. As shown in Table 11, the longer the culture time, the higher the methional reduction rate. When the contact time between the yeast and the wort was 4 hours or more, a malt-fermented liquid was obtained in which the ethanol concentration per 5.0 mass% Brix was less than 0.05 v/v%, methional was reduced by 85 mass% or more compared to the wort (fermentation raw material liquid), and the methional concentration per 5.0 mass% Brix was 3 ppb or less.

### [Example 6]

The fermentation raw material liquid was inoculated with a RAG⁻ phenotype *Kluyveromyces lactis* and fermented under different oxygen-supply conditions, and the yeast concentration, ethanol concentration, and methional concentration of the resulting fermentation broths were examined. *Kluyveromyces lactis* strain NBRC648 was used as the RAG⁻ phenotype *Kluyveromyces lactis,* and wort A was used as the fermentation raw material liquid.

### (1) Fermentation under oxygen-supply condition 2 (Reference Example 1)

400 mL of wort was placed into a 500 mL jar fermenter, and yeast was inoculated to achieve an initial cell count of 2.0×10⁵ per mL of wort. The pre-cultured yeast was inoculated into the wort and fermented in the same manner as in Example 1, except that a 0.2 µm filter was attached to the exhaust port to allow air to flow in and out without actively supplying air, and the stirring blade was rotated at 50 rpm to stir the mixture, and the mixture was fermented at 18°C and atmospheric pressure for one day. The concentration of the yeast (final cell count), ethanol concentration, and methional concentration of the obtained fermentation broth were quantified. The results are shown in Table 12.

### (2) Fermentation under oxygen supply condition 4 (Reference Example 1)

400 mL of wort was put into a 500 mL jar fermenter, and yeast was inoculated so that the initial cell count was 2.0 × 10⁵ per mL of wort. The pre-cultured yeast was inoculated into the worts and fermented in the same manner as in (1) described above, except that a 0.2 µm diameter filter was attached to the exhaust port, nitrogen gas was blown in, and the stirring blade was rotated at 50 rpm to stir the mixture, and the mixture was fermented at 18°C and atmospheric pressure for 1 day. The yeast concentration (final cell count), ethanol concentration, and methional concentration of the obtained fermentation broths were quantified. The results are shown in Table 12.

**[Table 12]**

| Yeast species | Oxygen-supply conditions | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|
| No inoculation | - | - | - | - | 32.85 | 13.69 | - |
| NBRC648 | 2 | 1.02E+07 | 0.003 | 0.001 | 2.3 | 0.69 | 93.0 |
| NBRC648 | 4 | 1.89E+06 | 0.002 | 0.001 | 22.9 | 9.54 | 30.3 |

In Table 12, the column with the "oxygen-supply conditions" value of "2" shows the results when fermentation was carried out in a state where air was not actively supplied but air was allowed to enter and exit (oxygen-supply condition 2 in Reference Example 1), and the column with "4" shows the results when fermentation was carried out in a state where nitrogen gas was blown in (oxygen-supply condition 4 in Reference Example 1). In the fermentation under oxygen-supply condition 2, which is an anaerobic environment, a malt-fermented liquid was obtained in which the ethanol concentration per 5.0 mass% Brix was less than 0.05 v/v%, and the methional content was reduced by 85 mass% or more compared to the wort (fermentation raw material liquid), and the methional concentration per 5.0 mass% Brix was 3 ppb or less. On the other hand, in the fermentation under oxygen-supply condition 4, which is a completely anaerobic environment, the methional reduction rate was only about 30%, and the fermentation was insufficient.

Next, fermentation was carried out under oxygen supply condition 4 in the same manner as in (2) described above, except that the initial cell count was set to the values shown in Table 13. The cell concentration (final cell count), ethanol concentration, and methional concentration of the resulting fermentation broths were quantified. The results are shown in Table 13.

**[Table 13]**

| Oxygen-supply condition 4 (completely anaerobic condition) | | | | | | | |
|---|---|---|---|---|---|---|---|
| Yeast species | Initial cell count (cells/mL) | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
| No inoculation | - | - | - | - | 32.85 | 13.6 | - |
| NBRC648 | 1.00E+06 | 2.30E+06 | 0.002 | 0.001 | 15.0 | 6.26 | 54.26 |
| NBRC648 | 3.00E+06 | 4.92E+06 | 0.000 | 0.000 | 2.9 | 1.21 | 91.14 |
| NBRC648 | 1.00E+07 | 1.45E+07 | 0.000 | 0.000 | 1.6 | 0.65 | 95.23 |

As shown in Table 13, when the inoculation number (initial cell count) exceeded 3×10⁶ cells/mL, even in the completely anaerobic environment, a malt-fermented liquid was obtained in which the final cell count exceeded 3×10⁶ cells/mL, the ethanol concentration per 5.0 mass% Brix was less than 0.05 v/v%, and the methional content was reduced by 85% by mass or more compared to the wort (fermentation raw material liquid), and the methional concentration per 5.0 mass% Brix was 3 ppb or less. From these results, it was found that even in a completely anaerobic environment in which yeast growth is suppressed during the fermentation, a malt-fermented liquid with a desired low alcohol concentration and a low methional concentration can be obtained when the initial cell count is sufficiently large.

### [Example 7]

The fermentation temperature when inoculating the fermentation raw material liquid with RAG-phenotype *Kluyveromyces lactis* and fermenting it was varied, and the yeast concentration, ethanol concentration, and methional concentration of the resulting fermentation broths were examined. Wort A was used as the fermentation raw material liquid.

*Kluyveromyces lactis* strain NBRC648 was used as a RAG-phenotype *Kluyveromyces lactis.* 160 mL of wort was placed in a 200 mL Erlenmeyer flask, and the pre-cultured yeast was inoculated into the worts and fermented by shaking culture at 60 rpm in an incubator at 18°C and atmospheric pressure in the same manner as in Example 1, except that the fermentation temperature and the initial cell count were set as shown in Table 14. The cell concentration (final cell count), ethanol concentration, and methional concentration of the obtained fermentation broths were quantified. The results are shown in Table 14.

**[Table 14]**

| Yeast species | Fermentation Temperature (°C) | Initial cell count (cells/mL) | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|---|
| No inoculation | | - | - | - | - | 32.85 | 13.69 | - |
| NBRC648 | 1 | 1.00E+06 | 1.00E+06 | 0.004 | 0.002 | 29.3 | 12.21 | 10.80 |
| NBRC648 | 5 | 1.00E+06 | 1.81E+06 | 0.004 | 0.002 | 11.3 | 4.71 | 65.60 |
| NBRC648 | 10 | 1.00E+06 | 6.99E+06 | 0.002 | 0.001 | 1.9 | 0.79 | 94.22 |
| NBRC648 | 15 | 1.00E+06 | 2.62E+07 | 0.003 | 0.001 | 1.6 | 0.67 | 95.13 |
| NBRC648 | 18 | 1.00E+06 | 2.94E+07 | 0.005 | 0.002 | 1.8 | 0.75 | 94.52 |
| NBRC648 | 22 | 1.00E+06 | 6.36E+07 | 0.011 | 0.005 | 1.2 | 0.52 | 96.22 |
| NBRC648 | 1 | 5.00E+06 | 5.18E+06 | 0.002 | 0.001 | 2.5 | 1.06 | 92.29 |
| NBRC648 | 5 | 5.00E+06 | 6.70E+06 | 0.002 | 0.001 | 2.7 | 1.13 | 91.78 |

As shown in Table 14, even when the fermentation temperature was low and the yeast hardly grew during the fermentation period, if the final cell count exceeded 3×10⁶ cells/mL, the methional reduction rate was 90% or more, and it was possible to prepare a malt-fermented liquid having an ethanol concentration of less than 0.05 v/v% per 5.0 mass% Brix and an ethanol concentration of less than 0.05 v/v% per 5.0 mass% Brix.

### [Example 8]

The fermentation temperature was set to 1°C, and the yeast concentration, ethanol concentration, and methional concentration of the obtained fermentation broths were examined. Wort A was used as the fermentation raw material liquid. As the yeast, *Kluyveromyces lactis* strain NBRC648 and *Kluyveromyces lactis* strain R33, which are RAG⁻ phenotype *Kluyveromyces lactis,* and *Saccharomycodes ludwigii* strain NBRC798TS were used.

240 mL of wort was placed in a 300 mL Erlenmeyer flask, and the pre-cultured yeast was inoculated into the wort in the same manner as in Example 1, except that the fermentation temperature, yeast species, and initial cell count were as shown in Table 15. The pre-cultured yeast was then inoculated into the wort, and fermentation was carried out by shaking culture in an incubator at 60 rpm, 18°C and atmospheric pressure. The yeast concentration (final cell count), ethanol concentration, and methional concentration of the resulting fermentation broths were quantified. The results are shown in Table 15.

In addition, each of the fermentation broths obtained was diluted 2.56 times to prepare a liquid (malt-fermented beer-like sparkling beverage), and the taste of the liquid was evaluated by 5 experienced panelists. The results are shown in Table 16.

**[Table 15]**

| Yeast species | Fermentation Temperature (°C) | Initial cell count (cells/mL) | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|---|
| No inoculation | - | - | - | - | - | 32.85 | 13.69 | - |
| KL NBRC648 | 1 | 5.0.E+06 | 9.1.E+06 | 0.005 | 0.00 | 4.05 | 1.69 | 87.66 |
| KL R33 | 1 | 5.0.E+06 | 6.7.E+06 | 0.004 | 0.00 | 3.18 | 1.32 | 90.32 |
| SL NBRC798TS | 1 | 5.0.E+06 | 6.9.E+06 | 0.145 | 0.06 | 1.56 | 0.65 | 95.26 |

**[Table 16]**

| Yeast species | Sensory comments for diluted malt-fermented liquid |
|---|---|
| KL NBRC648 | Mild, refreshing, light |
| KL R33 | Mild, refreshing, light, grain |
| SL NBRC798TS | Bright, sour, mild, refreshing |

As shown in Table 15, the fermentation broths obtained using any of the yeasts had a methional reduction rate of 85% or more, and were sufficiently fermented. In particular, the fermentation broth obtained using the *Kluyveromyces lactis* strain NBRC648 and the *Kluyveromyces lactis* strain R33, which are RAG-phenotype *Kluyveromyces lactis,* produced a low amount of ethanol, and was characterized by being mild, but refreshing, light, and easy-to-drink compared to the fermentation broth obtained using *Saccharomycodes ludwigii* strain NBRC798TS (Table 16).

### [Example 9]

Fermentation was carried out on a pilot scale using a RAG⁻ phenotype *Kluyveromyces lactis,* and the yeast concentration, ethanol concentration, and methional concentration of the resulting fermentation broths were examined. Wort D was used as the fermentation raw material liquid. As yeast, *Kluyveromyces lactis* strain NBRC648 and *Kluyveromyces lactis* strain R86, which are RAG⁻ phenotype *Kluyveromyces lactis,* were used.

### <Fermentation in fermentation tanks>

100 L of wort D (9.0% Brix) was placed in a 200 L fermentation tank, and yeast was added to the fermentation tank to achieve initial cell counts shown in Table 17. The fermentation tank was then pressurized at 0.026 MPa, and fermentation was carried out for 3 days at 18°C under conditions in which air was supplied at 0.67 NL/min per 100 L of fermentation broth (oxygen-supply condition 3 in Reference Example 1). The yeast concentration (final cell count), ethanol concentration, and methional concentration of the obtained fermentation broths were quantified. The results are shown in Table 17.

**[Table 17]**

| Yeast species | Initial cell count (cells/mL) | Final cell count (cells/mL) | Ethanol (%ABV) | Ethanol/ Equivalent to 5% Brix (%ABV) | Methional (ppb) | Methional/ Equivalent to 5% Brix (ppb) | Methional reduction rate (%) |
|---|---|---|---|---|---|---|---|
| No inoculation | - | - | - | - | 12.63 | 5.26 | - |
| KL NBRC648 | 2.61.E+06 | 2.62E+07 | 0.024 | 0.014 | 0.45 | 0.25 | 96.41 |
| KL R86 | 2.73.E+06 | 4.00E+07 | 0.081 | 0.046 | 0.45 | 0.25 | 96.46 |

As shown in Table 17, it was confirmed that even on a pilot scale, by fermenting under appropriate oxygen-supply conditions using RAG⁻ phenotype *Kluyveromyces lactis,* it is possible to obtain a malt-fermented liquid in which the ethanol concentration per 5.0 mass% Brix is less than 0.05 v/v%, methional is reduced by 85% or more compared to the wort (fermentation raw material liquid), and the methional concentration per 5.0 mass% Brix is 3 ppb or less.

## Claims

1. A method for producing a malt-fermented liquid, comprising
inoculating a fermentation raw material liquid containing a malt-derived saccharification product with a yeast and fermenting it to prepare a malt-fermented liquid, wherein
the yeast is a RAG⁻ phenotype *Kluyveromyces lactis*; and
an ethanol concentration of the malt-fermented liquid is less than 0.05 v/v% per 5.0 mass% Brix.

2. The method for producing a malt-fermented liquid according to claim 1, wherein a methional concentration of the malt-fermented liquid is 3.0 ppb or less per 5.0 mass% Brix.

3. The method for producing a malt-fermented liquid according to claim 1, wherein the methional concentration of the malt-fermented liquid is 15 mass% or less of the methional concentration of the fermentation raw material liquid.

4. The method for producing a malt-fermented liquid according to claim 1, wherein a concentration of the yeast in the malt-fermented liquid at the end of the fermentation is 3.0 × 10⁶ cells/mL or more.

5. The method for producing a malt-fermented liquid according to claim 1, wherein a concentration of the yeast of the malt-fermented liquid at the start of the fermentation is 2.0 × 10⁴ cells/mL or more.

6. The method for producing a malt-fermented liquid according to claim 1, wherein
the fermentation is carried out under oxygen-supply conditions, and
the oxygen-supply conditions are conditions in which a time required to increase the dissolved oxygen concentration of pure water from 6.0 ppm to 8.0 ppm at 18°C and atmospheric pressure is more than 0 hours and not more than 5 hours.

7. The method for producing a malt-fermented liquid according to claim 1, wherein the fermentation is carried out under conditions in which no oxygen is supplied.

8. The method for producing a malt-fermented liquid according to claim 1, wherein the fermentation is carried out at a temperature of 1°C or higher.

9. The method for producing a malt-fermented liquid according to claim 1, wherein the fermentation is carried out for 4 hours or more.

10. The method for producing a malt-fermented liquid according to claim 1, wherein the fermentation is carried out for 24 hours or more.

11. A method for producing a malt-fermented beverage, comprising
producing a malt-fermented liquid by the method for producing a malt-fermented liquid according to any one of claims 1 to 10, followed by
producing a malt-fermented beverage using the obtained malt-fermented liquid as a raw material.

12. The method for producing a malt-fermented beverage according to claim 11, further comprising diluting the malt-fermented liquid.

13. The method for producing a malt-fermented beverage according to claim 11, wherein a malt-fermented beverage with an original wort extract content of 3 to 7 mass% is produced.

14. The method for producing a malt-fermented beverage according to claim 11, wherein the malt-fermented beverage is a beer-like sparkling beverage.

15. A malt-fermented beverage having an ethanol concentration of less than 0.05 v/v% per 5.0 mass% Brix and a methional concentration of 3.0 ppb or less per 5.0 mass% Brix.

16. The malt-fermented beverage according to claim 15, which is a beer-like sparkling beverage.
